# EUROPEAN PATENT APPLICATION

(11) **EP 2 187 084 A1**
(43) Date of publication of application: **19.05.2010**
(21) Application number: 08169208.9
(22) Date of filing: 14.11.2008
(51) Int. Cl.: F16F 9/19

(54) **Hydraulic rotation damper**

(71) Applicant: Talpe, Joseph, 8581 Avelgem-Kerkhove (BE)
(72) Inventor: Talpe, Joseph, 8581 Avelgem-Kerkhove (BE)
(74) Representative: Van Reet, Joseph

(57) **Abstract**

The present invention relates to a hydraulic rotation damper 5, comprising a closed cylinder cavity defined by a substantially cup-shaped cylinder barrel 19 having an open top which is closed by a lid 35, a damper shaft 22, rotatable with respect to said cylinder barrel 19; a piston 21, placed within said cylinder cavity so as to divide it into a first side 20a and a second side 20b in restricted fluid communication with each other; and a one-way valve 33 from said first side 20a to said second side 20b of the cylinder cavity. The piston 21 comprises a helical thread 23in engagement with a corresponding thread 24 on either the cylinder barrel 19 or the damper shaft 22, and a rotation-preventing member in engagement with a guide 25 fixed to, or forming part of, the other one of said damper shaft 22 or cylinder barrel 19, so that a rotational motion of the shaft 22 with respect to the cylinder barrel 19 results in a translational motion of the piston 21 along said longitudinal axis. To make the damper entirely leak free, the open top of the cylinder barrel 19 is located in said first, low pressure side 20a of the cylinder cavity whilst in said second, high pressure side 20b of the cylinder cavity, the substantially cup-shaped cylinder barrel 19 is free from openings which are sealed with a shaft seal.

The present invention also relates to linear actuators comprising such an hydraulic rotation damper 5, as well as to a closure mechanisms for hinged members, such as doors, gates, or windows, comprising such actuators.

## Description

The present invention relates to a hydraulic rotation damper.

Hydraulic rotation dampers are well-known in the art. In particular, hydraulic rotation dampers are used in actuators in closure mechanisms for hinged members, such as doors, gates or windows, to avoid slamming. Such hydraulic components are however delicate and usually badly suited for outdoors use. They are more particularly quite sensitive to temperature variations and are also often subject to leakage problems.

Examples of such rotation dampers were disclosed, for example in US Patent 4,825,503 and UK Patent Application GB 2 252 790. This type of rotation damper, using a rotating piston, does however present several drawbacks. Because the rotating piston has a travel of less than 360°, the rotation damper is directly coupled to the actuator output, without any multiplication stages. Since in this application it is important for the damper to be as compact and unobtrusive as possible, the area of the piston is necessarily limited. To achieve the required damping torques, comparatively high hydraulic pressures will thus be required. This makes it more difficult to prevent leaking, in particular through the damping adjustment valve, which is in fluid connection with the high-pressure side of the damper.

As an alternative, a different type of hydraulic rotation damper has been disclosed in US Patent 4,094,957. This prior art rotation damper comprises a closed cylinder cavity which has a longitudinal axis and which is defined by a substantially cup-shaped cylinder barrel; a damper shaft which extends through a top of the cylinder barrel into the cylinder cavity and which is rotatable with respect to said cylinder barrel substantially around said longitudinal axis; a piston, placed within said cylinder so as to divide the cylinder cavity into a first side and a second side in restricted fluid communication with each other; and a one-way valve allowing flow of fluid from said first side to said second side of the cylinder cavity so that in said second side a higher hydraulic pressure can be achieved than in said first side. The piston comprises a helical thread in engagement with a corresponding thread on the damper shaft, and a rotation-preventing member in engagement with the cylinder barrel, so that a rotational motion of the shaft with respect to the cylinder barrel results in a translational motion of the piston along said longitudinal axis. The travel of this rotation damper is not limited to 360°, so that it can be applied, for instance, to sliding doors as illustrated in that document. However, it still has significant drawbacks.

A first drawback of this hydraulic rotation damper of the prior art is that it still is relatively leak-prone. In particular in outdoor applications, which, to prevent being substantially affected by temperature changes, normally use a hydraulic fluid of low, substantially constant viscosity (i.e. a viscostatic fluid), the low viscosity of the fluid requests additional measures to prevent leaks. The fact that the cylinder barrel of this damper of the prior art presents openings at both ends increases the risk of leaks, facilitated both by gravity, and by the higher pressures on the second side of the cylinder cavity. In the first, low pressure side of the cylinder cavity, the damper shaft is more particularly sealed by means of a shaft seal in an opening in a lid closing the top of the cylinder barrel. Due to the fact that the rotation damper is disposed horizontally, the hydraulic fluid can constantly leak by gravity along this shaft seal. In the second, high pressure side of the cylinder cavity the cylinder barrel is provided with an opening for a damping adjustment needle valve. This opening is sealed with a shaft seal around the needle of the needle valve. Hydraulic fluid cannot only leak by gravity along this shaft seal but especially also by the high hydraulic pressure which may be generated in the second side of the cylinder cavity. Although only very small amounts of hydraulic fluid may leak out of the damper, it is important to avoid even such small leaks since the damper should be maintenance free for a large number of years.

It is an object of the present invention to substantially prevent hydraulic fluid leaks so that the damper is maintenance free for even a larger number of years, especially when it is filled with a hydraulic fluid having a relatively low viscosity.

The present invention achieves this object by the fact that, around the second side of the cylinder cavity, the substantially cup-shaped cylinder barrel is free from sliding joints, and is preferably even completely joint-free. Due to the presence of the one-way valve which allows flow of fluid from the first side of the cylinder cavity to the second side thereof, the damping force of the damper is smaller when the piston is moved towards the first side of the cylinder cavity than when it is moved towards the second side thereof. Consequently, under normal conditions of use, a much higher pressure will be produced in the second cylinder cavity side when the piston is moved towards this second side than in the first cylinder cavity side when the piston is moved towards this first side.

By "sliding joint" is meant in the present specification a joint between several parts that can move with respect to each other tangentially to a joint surface, translationally and/or rotationally. Sealing such sliding joints presents a problem, since the relative movement of the parts tangentially to the joint can use and/or deform interposed seals, leading to leaks through the joint. Moreover, the seal between the moving parts has to be kept "wet" by the hydraulic fluid this leading always to some loss of fluid.

In the rotation damper of the present invention leakage is prevented due to the fact that any sliding joints, such as the joint between the damper shaft and the opening provided for it at the top of the cylinder barrel, are provided around the first, low pressure side of the cylinder cavity. The presence of the opening at the top of the cup-shaped cylinder barrel in the first side of the cylinder cavity and the absence of sliding joints in the cylinder barrel in the second side of the cylinder cavity have both to be considered in the position of the piston wherein the volume of the first cylinder cavity side is the smallest and the volume of the second cylinder cavity side the largest. The rotation damper is further preferably arranged vertically, with the first side of the cylinder cavity on top, so as to preventing gravity leaks of the hydraulic fluid along the damper shaft.

In the hydraulic rotation damper of US 4,094,957, the second, high-pressure side of the cylinder is not completely enclosed by the cylinder barrel because the latter presents an opening for the needle of a needle valve for adjusting the flow of hydraulic fluid between the first and second sides, and thus the damping characteristics of the rotation damper. Since said opening leads directly to that second, high-pressure side of the cylinder cavity, hydraulic fluid leaks through the sliding joint between the needle and the opening wall are likely, despite a shaft seal, more particularly an O-ring seal, around said needle. In particular, if the needle valve is moved towards a more restricted position, an amount of hydraulic fluid will necessarily slip across the moving seal.

It is a further object of the present invention to provide a damper which is adjustable but which still has a higher leak resistance. For this, a flow restrictor, in particular in the form of a needle valve, may be provided between said first and second sides of the cylinder cavity, which is adjustable through an orifice in the cylinder barrel, wherein said second side of the cylinder barrel and said orifice are at opposite sides of the flow restrictor. As the orifice and the second, high-pressure side of the cylinder cavity are at opposite sides of the flow restrictor, this adjustment orifice will be isolated from the high pressure in the second side of the cylinder cavity, and thus considerably less leak-prone. Advantageously, said orifice may open to said top of the cylinder barrel, so that, in the abovementioned vertical orientation of the damper, any leaks, in particular also gravity leaks, will be prevented.

A further object of the present invention is to provide a particularly compact damper while preventing hydraulic pressure losses through the interface between piston and shaft. In the hydraulic rotation damper of US 4,094,957, hydraulic fluid may namely leak between the two cylinder sides between the helical threads of piston and shaft. To prevent this, in the hydraulic rotation damper of the invention, said piston may present a cavity, open towards the top of the cylinder barrel for receiving said damper shaft, but substantially closed towards the bottom of the cylinder barrel, the damper shaft being screwed in said cavity and said cavity forms part of the first side of the cylinder cavity and is in substantially unrestricted fluid communication with the remaining part of the first side of the cylinder cavity. Since the two sides of the cylinder will thus not be connected by the interface between piston and damper shaft, no pressure loss will occur there. Advantageously, said piston cavity may be in substantially unrestricted fluid communication with said remaining part of the first side of the cylinder cavity through a duct in said damper shaft. Also advantageously, said one-way valve may be placed in said piston, between said second side of the cylinder cavity and said piston cavity. Both these options have the advantage of increased compactness of the rotation damper and of making the construction of the damper less complicated.

It is a further object of the present invention to provide a hydraulic damper which is protected against too high stresses in the damper or in the actuator which comprises the damper. For this purpose, the rotation damper of the invention may advantageously be provided with a relief or safety valve allowing fluid flow from said second side to said first side of the cylinder cavity, set to open when an overpressure in said second side exceeds a predetermined threshold, and close again once said overpressure falls back under the same, or a lower threshold. The overpressure required to open the relief valve is higher than the pressure which is required to open the one-way valve to allow fluid flow from the first to the second side since the relief valve should not open under normal conditions of use but only when the pressures would become too high whilst the one-way valve should open immediately when the piston is moved towards the first side of the cylinder cavity so that this movement is damped as little as possible. Just like the one-way valve, the relief or safety valve may also be placed in said piston, between said second side of the cylinder cavity and said piston cavity.

It is a further object of the invention to prevent flow of hydraulic fluid around said piston, thus achieving a higher and more consistent damping with a more compact damper.

For this purpose, said piston may advantageously be provided with a continuous outer perimeter surface in substantially sealing contact with a continuous inner perimeter surface of the cylinder barrel around an entire perimeter of the piston. By separating the guiding function from the sealing function and thus ensuring a better fluid seal between the two sides of the cylinder, this feature allows higher pressure differences between them, and thus a more efficient damper with less bulk and more consistent damping characteristics over time.

It is a further object of the present invention to provide a more efficient, compact and leak-resistant hydraulically damped linear actuator. The present invention thus also relates to a linear actuator, comprising a pushrod, a resilient element, connected to said pushrod so as to urge it in one direction along an axis of translation, a hydraulic rotation damper according to the invention, and a motion-converting gearing, preferably in the form of a rack-and-pinion gearing, comprising a rotary output element directly or indirectly coupled to said rotation damper, for converting a motion of said pushrod along said translation axis into a rotary motion of said rotary output element.

It is a further object of the present invention to provide a closure mechanism for a member hinged to a structure. The present invention thus also relates to a closure mechanism for a member hinged to a structure, comprising an actuator according to the invention.

The terms "top", "bottom", "upwards", and "downwards", as used in this description, should be understood as relating to the normal orientation of these devices in use. Of course, during their production, distribution, and sale, the devices may be held in a different orientation.

Several preferred embodiments of the invention will be described illustratively, but not restrictively, with reference to the accompanying figures, in which:
Fig. 1a is a longitudinal section of an embodiment of a rotation damper according to the invention;
Figs. 1b and 1c are transversal sections of the rotation damper of Fig. 1a, along, respectively, lines B-B, and C-C;
Fig. 2 is a perspective view of the rotation damper of Fig. 1;
Figs. 3a-c are further longitudinal sections of the rotation damper of Fig. 1a, with the damper shaft in a clockwise rotation and the piston in an upwards motion;
Fig. 3d is a transversal section of the rotation damper of Fig. 3b along line D-D;
Figs. 4a-c are longitudinal sections of the rotation damper of Fig. 4a, with the damper shaft in a counter-clockwise rotation and the piston in a downwards motion;
Fig. 5a is a perspective view of an embodiment of a linear actuator according to the invention;
Fig. 5b is an exploded perspective view of the actuator of Fig. 5a;
Figs. 6-7 are top views of a gate closure mechanism with the actuator of Figs. 5a-5b;
Fig. 8 is a detail cut view of the actuator of Figs. 5a and 5b;
Fig. 9 is a detail perspective view of the actuator of Figs. 5a and 5b;
Figs. 10a, 10b are detail cut views of the actuator of Figs. 6a and 6b.

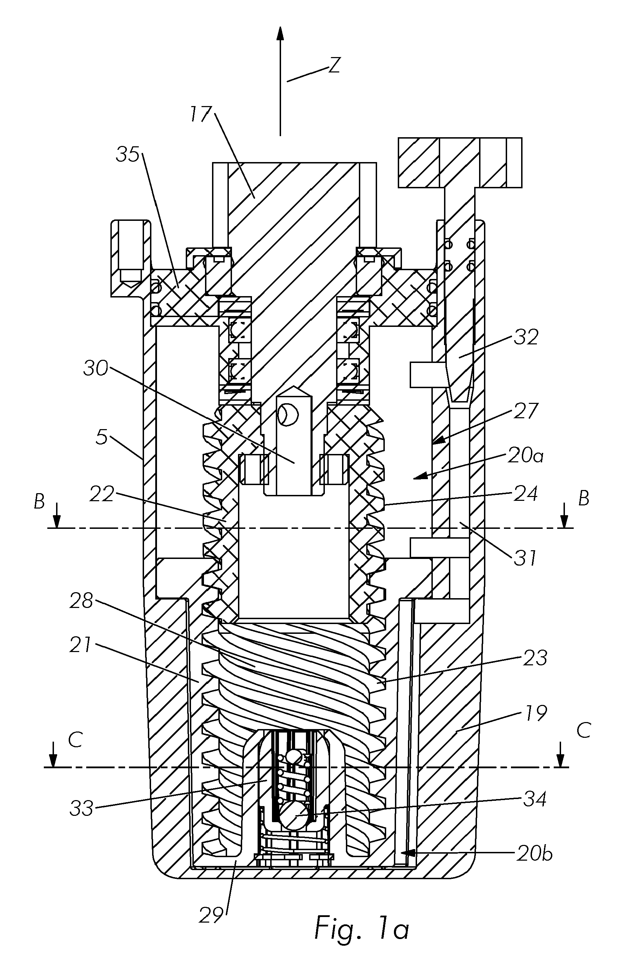

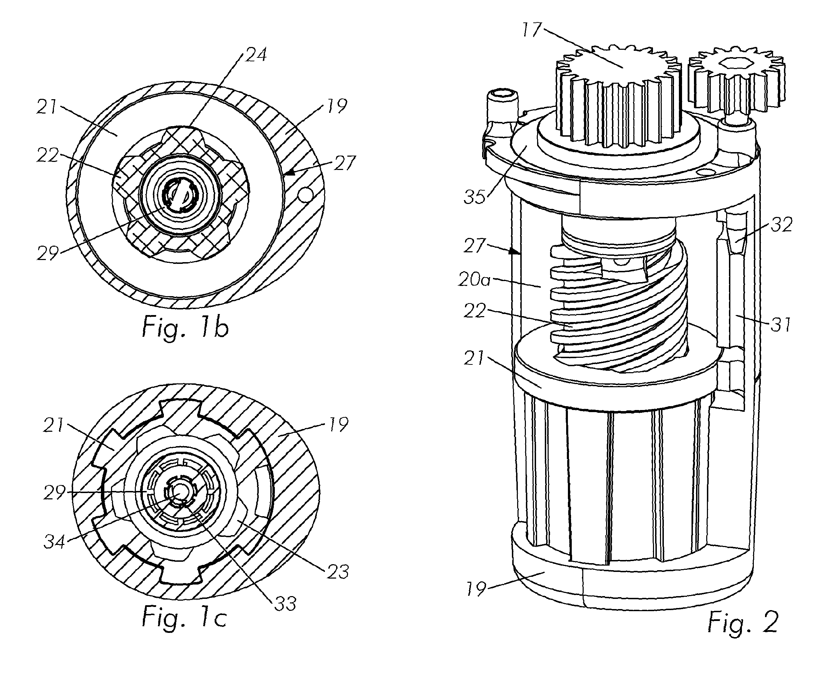

A first embodiment of a hydraulic rotation damper 5 according to the invention is illustrated in Fig. 1. It comprises a cup-shaped cylinder barrel 19 which is completely closed at the bottom but open at its top. The open top of the cup-shaped cylinder barrel 19 is closed by means of a lid 35 to form a closed cylinder cavity 20. This cylinder cavity 20 is divided by a piston 21 into a first side 20a and a second side 20b. The damper shaft 22, which in this embodiment is topped by a pinion 17, is connected to the piston 21 and extends through an opening in the lid 35 out of the cylinder cavity 20 forming a sliding cylindrical joint. This sliding cylindrical joint is sealed off by means of a shaft seal (O-ring) applied around the damper shaft 22.

The piston 21 has a piston cavity 28 which has an inner helical thread 23 in engagement with a corresponding outer helical thread 24 on the damper shaft 22. The helical threads are multiple threads comprising in particular four threads. In this way, the step of the threads may be higher, in particular higher than 10 mm, for example about 30 mm. On its outer side, the piston 21 has a rotation-preventing member in the form of protrusions 24 in engagement with a guide in the form of corresponding longitudinal grooves 25 on part of the inner surface of the cylinder barrel 19. By this means, a rotational movement of the damper shaft 22 is converted into a translational movement of the piston 21 within the cylinder barrel 19. A clockwise rotation of the damper shaft 22 will thus displace the piston 21 upwards, whereas a counter-clockwise rotation of the damper shaft will displace the piston 21 downwards. Alternative means are however at the reach of the skilled person. For instance, the helical threads could be instead on the piston 21 and the cylinder barrel 19, and the rotation-preventing member placed between the piston 21 and the damper shaft 22. Alternative rotation-preventing members, such as, for example, simple pin-and-groove systems, could also be considered according to the particular needs of the user.

The piston 21 further comprises, above said rotation-preventing member, a continuous outer perimeter surface in substantially sealing contact with a continuous inner perimeter surface 27 of the cylinder barrel 19 around the whole piston 21. This prevents flow of the hydraulic fluid around the piston 21 and a resulting loss of pressure between the first and second sides 20a, 20b. It in particular also enables to use a less viscous hydraulic fluid which offers the advantage that it is easier to select a hydraulic fluid, the viscosity of which is less temperature dependent and thus more suitable for outdoor use. The hydraulic fluid is preferably a substantially viscostatic fluid.

The cavity 28 of the piston 21 is closed at its lower end to form the piston bottom 29 dividing the cylinder cavity 20 into a first side 20a and a second side 20b. This cavity 28 is connected by a substantially unrestricted fluid duct 30 in the damper shaft 22 to the remaining part of the first side 20a of the cylinder cavity 20 so that pressure in the cavity 28 is substantially the same as the pressure in the remaining part of the first side 20a of the cylinder cavity 20.

The first and second sides 20a, 20b of the cylinder cavity 20 are connected by a fluid duct 31, restricted by a needle valve 32, accessible through an orifice opening at the top of the cylinder barrel 19 for adjusting its resistance to hydraulic fluid flow between the first and second sides 20a, 20b, and therefore the damping characteristics of the rotation damper 5. The needle of the needle valve 32 is sealed by means of a shaft seal (0-ring) in the orifice opening.

The illustrated rotation damper 5 is substantially unidirectional, opposing a substantially higher torque resistance to a counter-clockwise rotation of the damper shaft 22 (lowering of the piston) than to a clockwise rotation of the same damper shaft 22 (raising of the piston) at the same speed. For this purpose, the rotation damper 5 comprises a further fluid duct connecting the first and second sides 20a and 20b of the cylinder cavity 20. This further duct is not provided with a needle valve but instead with a one-way valve 33 allowing hydraulic fluid flow from said first side 20a to said second side 20b of the cylinder cavity 20. Therefore, when the damper shaft 22 rotates in a counter-clockwise direction in respect to the axis Z, and the piston 21 travels downwards, the one-way valve will stay closed, and the rotation damper 5 will oppose a significantly higher torque against this movement than when the damper shaft 22 rotates in a clockwise direction and the piston 21 travels upwards, in which case the one-way valve 33 will open, letting the hydraulic fluid flow from the first side 20a to said second side 20b.

In the illustrated embodiment, the rotation damper 5 comprises, within the body of the one-way valve 33, yet another duct connecting the first and second sides 20a and 20b of the cylinder cavity. This duct comprises a relief valve 34 allowing flow of hydraulic fluid from the second side 20b to the first side 20a only when the pressure inside the second side 20b becomes too high, i.e. when it exceeds a safety threshold level. This valve is thus a safety valve which prevents damage to the mechanism, for example when a person or the wind exerts an extra force onto a door or gate connected to this rotation damper 5 to close it. In this case, opening of the valve allows a higher closing speed (forced closing of the hinged member) and thus prevents high stresses in the rotation actuator and in the arm linking it to the hinged member. In the illustrated embodiment, both the one-way valve 33 and the relief or safety valve 34 are provided in ducts in the piston bottom 29, between the second side 20b and the piston cavity 28. However, alternative configurations and locations of this valve system are within the reach of the skilled person, for instance with separate valves, of which at least one could possibly be located in the cylinder barrel 19, according to the user requirements.

Due to the presence of the one-way valve 33, the highest hydraulic fluid pressures will be reached in the second side 20b of the cylinder 20. Because the cylinder barrel 19 is cup-shaped, and completely closed at the bottom, in particular in the second, high pressure side 20b of the cylinder cavity 20, the illustrated hydraulic rotation damper 5 cannot leak, even when it is filled with a relatively low viscous hydraulic fluid which is particularly suited for outdoors applications, such as gate closing mechanisms. With the expression "completely closed in the second side of the cylinder cavity 20" is meant that the cylinder barrel does not have any opening allowing flow of fluid from said high-pressure second side 20b of the cylinder cavity 20 out of the damper. Although not preferred, it is also possible in the damper of the present invention to provide joints in the cylinder barrel 19 in the second side 20b of the cylinder cavity 20, but only in so far as those joints are not sliding joints between parts relatively movable tangentially to a joint surface. In an alternative embodiment, the bottom of the cylinder barrel could thus be a separate part affixed against the substantially cylindrical portion of the cylinder barrel, with a static seal pressed within the non-sliding joint formed between these two components. It is also possible to make a hole in the cylinder barrel for filling the cylinder cavity with the hydraulic fluid, and to close this hole in a completely fluid-tight manner by means of a screw plug.

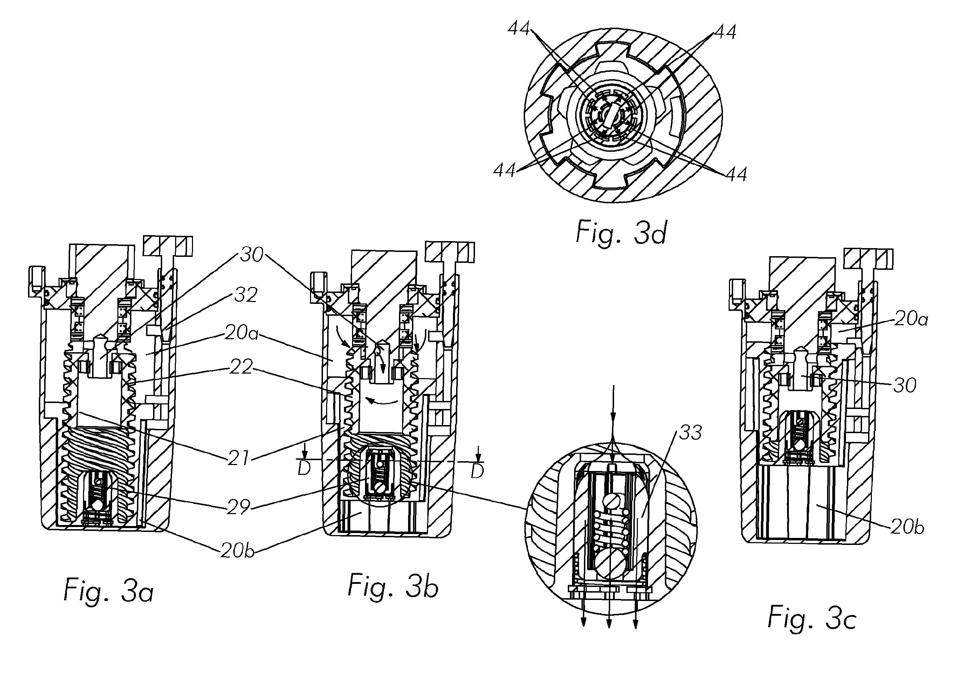

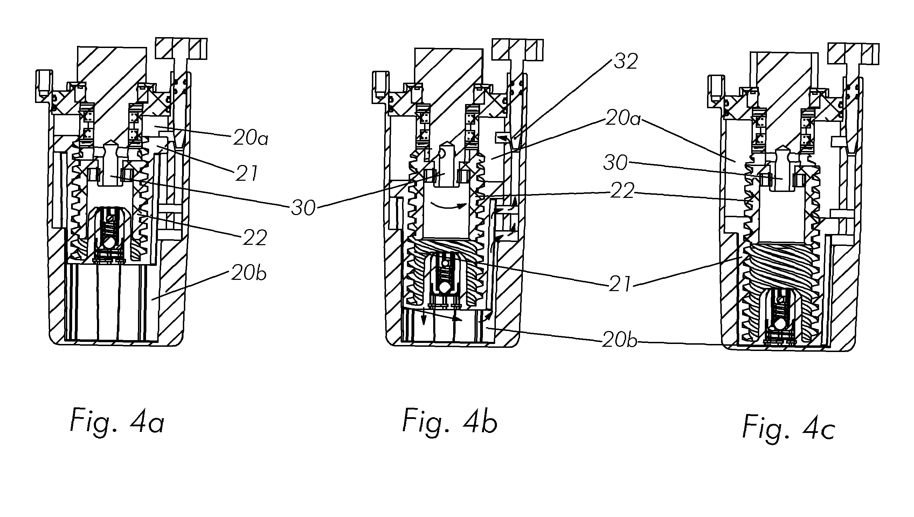

Turning to Figs. 3a to 3d, if the damper shaft 22 is rotated by an external torque in a clockwise direction around axis Z, the piston 21 will move upwards. Since the one-way valve 33 is set to open at a pressure at the first side 20a of the cylinder 20 higher than that of the second side 20, hydraulic fluid will flow from the first side 20a, through said piston cavity 28 and one-way valve 33, to the second side 20b, as shown in Figs. 3b, 3d, and the rotation damper 5 will only oppose a small resistance to this movement. If the damper shaft is rotated in the opposite, counter-clockwise direction around axis Z, as shown in Figs. 4a-4c, the piston 21 will move downwards. Since the one-way valve 33 will now remain closed, the hydraulic fluid will flow back from the second side 20b to the first side 20a only through the restricted duct 31, and the rotation damper 5 will thus oppose a higher resistance to this return movement.

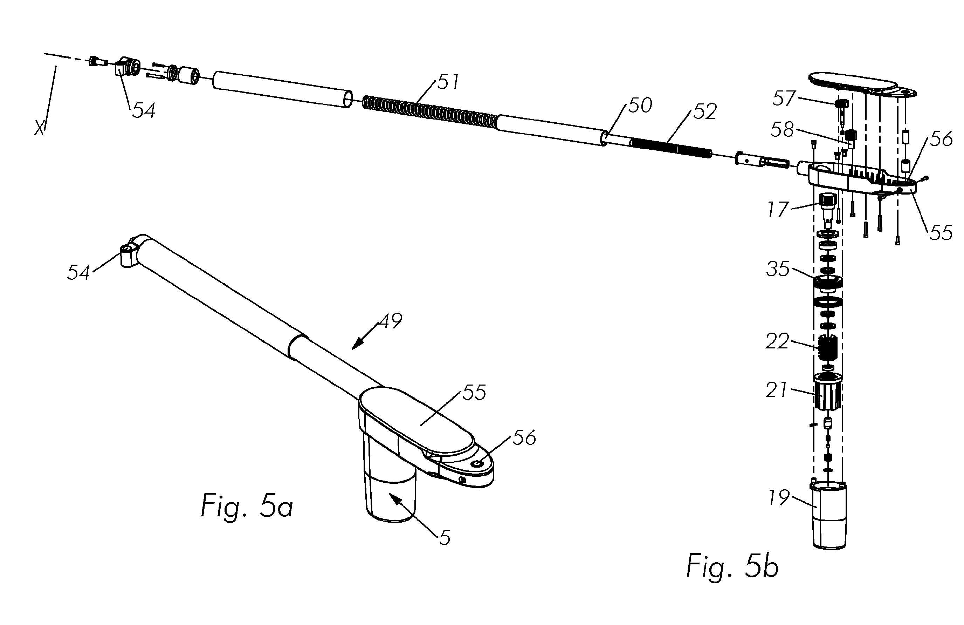

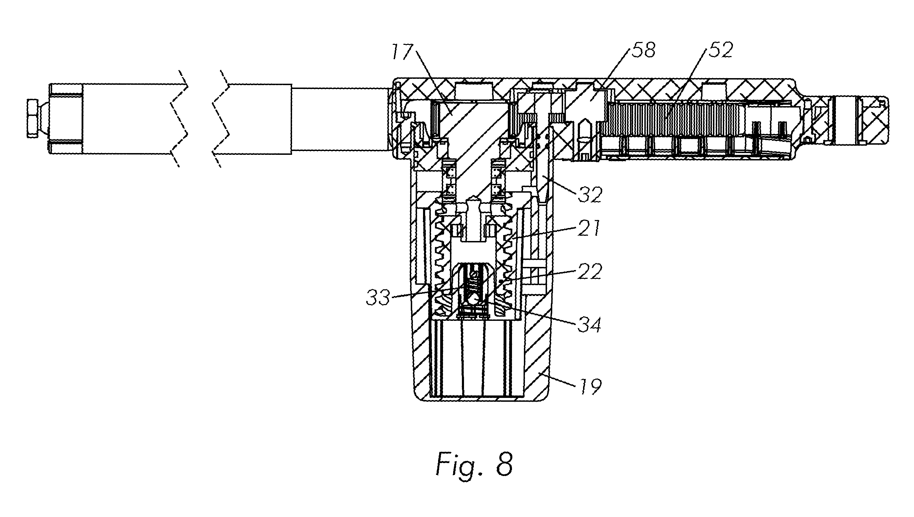

Figs. 5a-10b illustrate a linear actuator 49 with the rotation damper 5 already illustrated in Fig. 1.

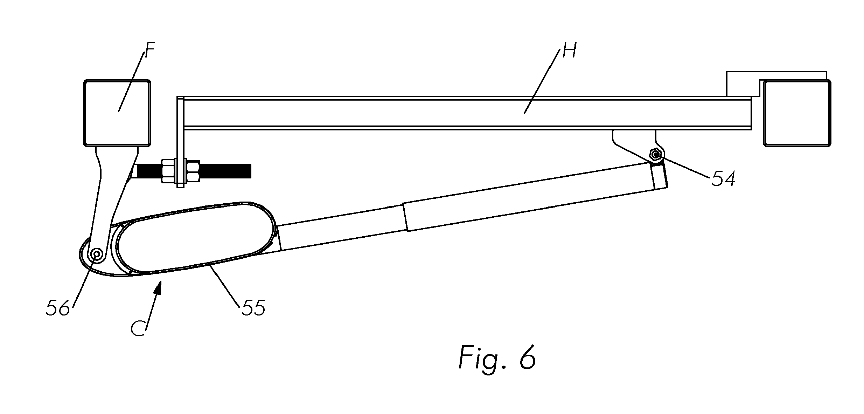

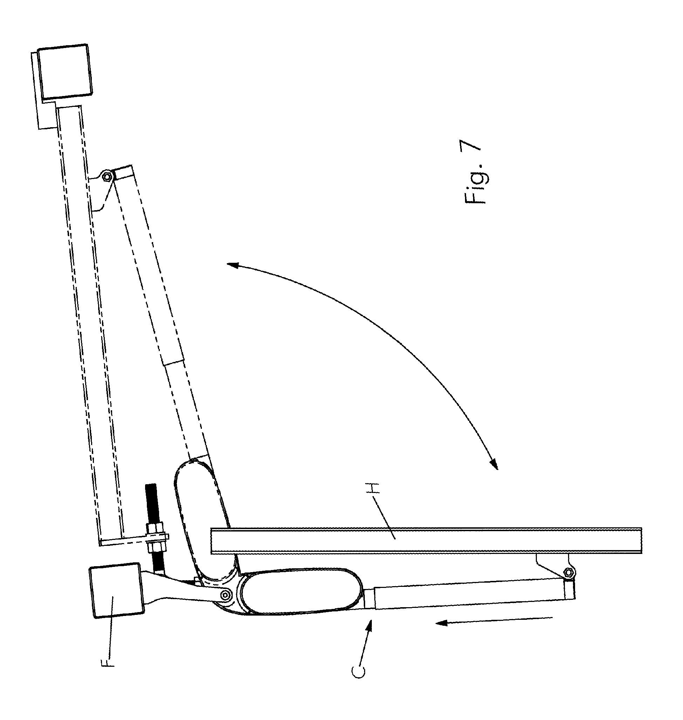

The linear actuator 49 comprises a pushrod 50, a resilient element 51, in this particular embodiment in the form of a pressure coil spring, urging the pushrod 50 in an outwards direction along axis X, rotation damper 5, and a motion-converting mechanism, formed in this particular embodiment by a rack 52 formed on said pushrod 50 and said pinion 17, topping the damper shaft 22 and in engagement with said rack 52. A linear movement of the pushrod 50 in said outwards direction is converted into a counter-clockwise rotation of the damper shaft 22 around the axis Z, and thus in a downwards, highly damped motion of the piston 21. The opposite movement of the pushrod 50 will however be only slightly damped, since the piston 21 will move upwards. This linear actuator 49 can be for instance used in a telescopic closure mechanism C such as is illustrated in Figs. 6, 7, with a first pivot 54 at the distal end of the pushrod 50, and a housing 55 with an opposite second pivot 56, wherein said first and second pivots 39,41 can be used to connect the closure mechanism C to, respectively, one or the other of a hinged member H or fixed frame F, as illustrated in Figs. 6, 7. Such closure mechanisms C can be used for hinged members opening in either direction: opening the hinged member H will always result in a contraction of the closure mechanism C and closing it in an extension.

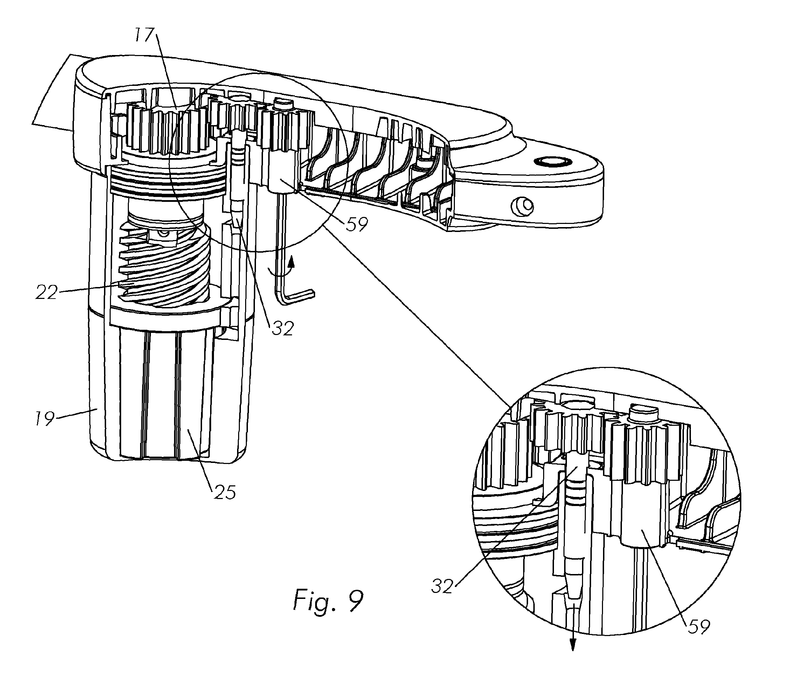

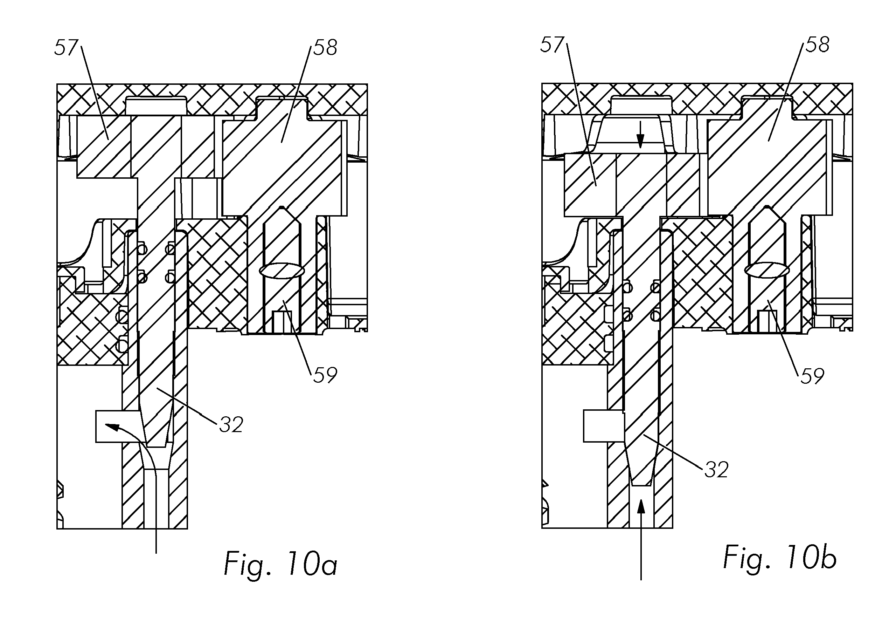

Since the housing 55 is fixed to the top of cylinder barrel 19, the needle valve 32 is not directly accessible. Instead, as seen in particular in Figs. 9 and 10a-b, it is coupled to a gearwheel 57 in engagement with a pinion 58 coupled to a small shaft 59 accessible from the bottom of the housing 55 to adjust said needle valve 32.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

## Claims

1. A hydraulic rotation damper (5), comprising:
- a closed cylinder cavity (20) which has a longitudinal axis and which is defined by a substantially cup-shaped cylinder barrel (19);
- a damper shaft (22) which extends through an opening at a top of the cylinder barrel (19) into the cylinder cavity (20) and which is rotatable with respect to said cylinder barrel (19) substantially around said longitudinal axis ;
- a piston (21), placed within said cylinder so as to divide the cylinder cavity (20) into a first side (20a) and a second side (20b) in restricted fluid communication with each other, the top of the substantially cup-shaped cylinder barrel (19) being adjacent to said first side (20a), and said piston (21) comprising:
■ at least one helical thread (23) in engagement with a corresponding thread (24) on either the cylinder barrel (19) or the damper shaft (22), and
■ a rotation-preventing member in engagement with a guide (25) fixed to, or forming part of, the other one of said damper shaft (22) or cylinder barrel (19), so that a rotational motion of the shaft (22) with respect to the cylinder barrel (19) results in a translational motion of the piston (21) along said longitudinal axis;
- a one-way valve (33) allowing fluid flow from said first side (20a) to said second side (20b) of the cylinder cavity (20); and
the rotation damper (5) being **characterised in that**, around said second side (20b) of the cylinder cavity (20), the substantially cup-shaped cylinder barrel (19) is free from sliding joints.

2. A hydraulic rotation damper (5) according to claim 1, wherein around said second side (20b) of the cylinder cavity (20) the cup-shaped cylinder barrel (19) is joint-free.

3. A hydraulic rotation damper (5) according to claim 1 or 2, further comprising a flow restrictor, in particular in the form of a needle valve (32), between said first and second sides of the cylinder cavity (20), said flow restrictor being adjustable through an orifice in the cylinder barrel (19), wherein said second side (20b) of the cylinder cavity (20) and said orifice are at opposite sides of the flow restrictor.

4. A hydraulic rotation damper (5) according to claim 3, wherein said orifice opens to said top of the cylinder barrel.

5. A hydraulic rotation damper (5) according to any one of the previous claims, wherein said piston (21) presents a cavity (28), open towards the top of the cylinder barrel (19) for receiving said damper shaft (22), but substantially closed towards the bottom of the cylinder barrel (19), the damper shaft (22) being screwed in said cavity and said cavity (28) forms part of the first side (20a) of the cylinder cavity (20) and is in substantially unrestricted fluid communication with the remaining part of the first side (20a) of the cylinder cavity.

6. A hydraulic rotation damper (5), comprising:
- a closed cylinder cavity (20) which has a longitudinal axis and which is defined by a substantially cup-shaped cylinder barrel (19);
- a damper shaft (22) which extends through an opening at a top of the cylinder barrel (19) into the cylinder cavity (20) and which is rotatable with respect to said cylinder barrel (19) substantially around said longitudinal axis ;
- a piston (21), placed within said cylinder so as to divide the cylinder cavity (20) into a first side (20a) and a second side (20b) in restricted fluid communication with each other, said piston (21) comprising:
■ at least one helical thread (23) in engagement with a corresponding thread (24) on either the cylinder barrel (19) or the damper shaft (22), and
■ a rotation-preventing member in engagement with a guide (25) fixed to, or forming part of, the other one of said damper shaft (22) or cylinder barrel (19), so that a rotational motion of the shaft (22) with respect to the cylinder barrel (19) results in a translational motion of the piston (21) along said longitudinal axis;
- a one-way valve (33) allowing fluid flow from said first side (20a) to said second side (20b) of the cylinder cavity (20); and
the rotation damper (5) being **characterised in that** said piston (21) presents a cavity (28), open towards the top of the cylinder barrel (19) for receiving said damper shaft (22), but substantially closed towards an opposite bottom of the cylinder barrel (19), the damper shaft (22) being screwed in said cavity, and **in that** said cavity (28) forms part of the first side (20a) of the cylinder cavity (20) and is in substantially unrestricted fluid communication with the remaining part of the first side (20a) of the cylinder cavity.

7. A hydraulic rotation damper (5) according to claims 5 or 6, wherein said piston cavity (28) is in substantially unrestricted fluid communication with said remaining part of the first side (20a) of the cylinder cavity through a duct (30) in said damper shaft (22).

8. A hydraulic rotation damper (5) according to any one of claims 5-7, wherein said one-way valve (33) is placed in said piston (21), between said second side (20b) of the cylinder cavity (20) and said piston cavity (28).

9. A hydraulic rotation damper (5) according to any one of the previous claims, further comprising a relief valve (34) from said second side (20b) to said first side (20a) of the cylinder cavity (20), set to open when an overpressure in said second side (20b) exceeds a predetermined threshold, and close again once said overpressure falls back under the same, or a lower threshold.

10. A hydraulic rotation damper (5) according to any one of the previous claims, wherein said piston (21) also comprises a continuous outer perimeter surface in substantially sealing contact with a continuous inner perimeter surface (27) of the cylinder barrel (19) around an entire perimeter of the piston (21).

11. A linear actuator (49), comprising:
- a pushrod (50);
- a resilient element (51), connected to said pushrod (50) so as to urge it in one direction along an axis of translation;
- a hydraulic rotation damper (5) according to one of claims 1 to 9; and
- a motion-converting gearing, preferably in the form of a rack-and pinion gearing, comprising a rotary output element (53) directly or indirectly coupled to said rotation damper (5), for converting a motion of said pushrod (50) along said translation axis into a rotary motion of said rotary output element (53).

12. A closure mechanism (C) for a member (H) hinged to a structure (F), comprising an actuator (1,49) according to claim 11.
